# EUROPÄISCHE PATENTSCHRIFT

(11) **EP 3 659 948 B1**
(45) Veröffentlichungstag und Bekanntmachung des Hinweises auf die Patenterteilung: **25.08.2021**
(21) Anmeldenummer: 19206927.6
(22) Anmeldetag: 04.11.2019
(51) Int. Cl.: B65G 33/04, B23P 19/00, B65G 47/51

(54) **MAGAZIN UND VERFAHREN ZUR SPEICHERUNG IM MAGAZIN**
MAGAZINE AND METHOD TO STORE IN THE MAGAZIN
MAGAZINE ET PROCÉDÉ DE STOCKAGE DANS LE MAGAZINE

(30) Priorität: 29.11.2018 DE 102018130317
(43) Veröffentlichungstag der Anmeldung: 03.06.2020
(73) Patentinhaber: Atlas Copco IAS GmbH, 75015 Bretten (DE)
(72) Erfinder: Wüste, Michael, 46485 Wesel (DE); Burmeister, Daniel, 80639 München (DE)
(74) Vertreter: Eder Schieschke & Partner mbB

(56) Entgegenhaltungen:
- EP-A1- 3 153 438
- CH-A- 367 753
- US-A- 1 750 310
- US-A- 4 501 380

## Beschreibung

Die vorliegende Erfindung betrifft ein Magazin zur Speicherung gleichartiger Elemente, die einen Schaft und einen Kopf aufweisen. Hierzu zählen bspw. Schrauben, insbesondere Fließlochschrauben, aber auch sonstige Befestigungsmittel oder generell Elemente mit einem Schaft und daran anschließendem Kopf. Im Weiteren wird daher stellvertretend nur die Bezeichnung "Elemente" gewählt.

Bei industriellen Fertigungsverfahren, bei denen Elemente verwendet oder verbaut werden, ist es in der Regel erforderlich, diese vereinzelt und in einer vorgegebenen Ausrichtung bereitzustellen. Bekannt sind bspw. Magazine, die in einem matrixartigen, ebenen Raster zeilen- und spaltenweise vorpositionierte Elemente enthalten. Auch mehrere übereinanderliegende Anordnungen dieser Art können ein (dann dreidimensionales) Magazin bilden.

Schwierigkeiten bereitet dabei zum einen die Größe der Magazine, denn vorteilhaft sollen meist möglichst viele Elemente auf engem Raum untergebracht sein. Zugleich sollen die Magazine leicht zu handhaben sein. Bevorzugt sind sie in der Nähe der Verarbeitungsmaschine angeordnet, wobei auch unterschiedliche Ausrichtungen im Raum (gekippte Lage) möglich sein müssen. Entsprechend muss sichergestellt sein, dass die im Magazin einsetzenden Elemente dort sicher gehalten sind und nicht herausfallen können. Schließlich soll das Be- und Entladen der Magazine einfach und vor allem schnell möglich sein, um den Verarbeitungsprozess zügig ausführen und Totzeiten vermeiden zu können.

Aus der US 1 750 310 A ist eine Vorrichtung zur Vereinzelung und Ausrichtung von Artikeln nach dem Oberbegriff des Anspruchs 1 bekannt, welche einen rotierenden Zylinder mit zwei gegenläufig zueinander auf der Umfangsfläche ausgebildeten spiralförmigen Nuten aufweist. Durch Rotation des Zylinders werden die in die Nuten eingreifenden Artikel an der gemeinsamen Mündung der beiden Nuten in geordneter Weise einem dort anschließenden Magazin zugeführt. Das Magazin selber hat nur eine durchschnittliche Speicherkapazität.

Aufgabe der vorliegenden Erfindung war es daher, ein Magazin und ein Verfahren zur Nutzung des Magazins anzubieten, welches die vorgenannten Nachteile überwindet.

Die Aufgabe wird gelöst durch ein Magazin nach Anspruch 1 bzw. ein Verfahren nach Anspruch 9. Weitere vorteilhafte Ausführungsformen ergeben sich aus den Unteransprüchen.

Die Erfindung beruht auf der Erkenntnis, eine Mehrzahl von Elementen besonders einfach räumlich ausgerichtet speichern zu können, in einer Nut, in der die Elemente hintereinander liegend angeordnet sind, und wobei sie durch geeignete Mittel in der Nut weiter förderbar sind bis zu einem Nutende, an dem das Element aus dem Magazin entnommen oder ausgeworfen werden kann, um es einer Verarbeitungsmaschine oder einer sonstigen Bestimmung zuzuführen.

Gleichzeitig wurde erfindungsgemäß erkannt, dass sich eine solche Nut sehr vorteilhaft in spiralförmiger Kontur in der Mantelfläche eines Zylinders so anordnen lässt, dass die Nut die Rotationsachse des Zylinders, ausgehend von einem Nutanfang, in mehreren, in axialer Richtung hintereinander liegenden Windungen bis zu einem Nutende spiralförmig umläuft. Dies minimiert den Bauraum des Magazins vorteilhaft. Die Elemente werden dabei mit ihrem Schaft in die Nut eingesetzt, sodass dieser vollständig oder zumindest zum überwiegenden Teil in die Nut bzw. in das Zylinderinnere hineinragt. Die Breite der Nut ist zweckmäßigerweise so gewählt, dass der Schaft jedes Elements in die Nut hineinragen kann, der Kopf jedoch dafür zu breit ist, sodass er außerhalb der Zylindermantelfläche verbleibt, in die die Nut eingebracht ist. Besonders zweckmäßig ist es, die radiale Tiefe der Nut so groß zu wählen, dass das Element in radialer Richtung vollständig in die Nut hineinragen kann, bis die Unterseite des Elementkopfes zu beiden Seiten der Nutflanken auf der Zylindermantelfläche aufliegt.

In dem erfindungsgemäßen Magazin lassen sich daher die Elemente wendelförmig hintereinander anordnen, wobei der Schaft der Elemente jeweils in das Zylinderinnere, vorzugsweise auf die Rotationsachse des Zylinders, gerichtet ist.

Die einzelnen Elemente lassen sich über geeignete Greifmittel aus der Nut entnehmen. Alternativ können die Elemente durch geeignete Vorschubmittel innerhalb der Nut weiterverschoben werden, sodass sie nacheinander am Nutende verfügbar sind und dort ausgeworfen oder entnommen werden können.

Erfindungsgemäß ist wenigstens ein antreibbarer Mitnehmer vorgesehen, der in einem Fördersinn relativ zum Zylinder in Umfangsrichtung um die Mantelfläche herum bewegbar ist. Ein Element wird auf seinem Weg entlang der Nut bis zum Nutende stets von dem gleichen Mitnehmer des Käfigs beaufschlagt, bzw. gefördert. Der Mitnehmer überstreicht dabei die Mantelfläche des Zylinders und beaufschlagt die aus der Nut herausragenden Köpfe (oder eventuell auch aus der Nut radial nach außen hervorragende Abschnitte der Schäfte) in Umfangsrichtung mit einer Vorschubkraft. Die in Umfangsrichtung beaufschlagten Elemente werden dadurch entlang der Nut weiter verschoben bzw. gefördert und gelangen so automatisch nacheinander zum Nutende. Diese Verschiebung kann erzeugt werden, indem entweder der Mitnehmer im Wesentlichen ortsfest verbleibt und der Zylinder um seine Rotationsachse gedreht wird. Auch die kinematische Umkehr ist denkbar und hier bevorzugt, sodass der Zylinder im Wesentlichen ortsfest bleibt oder jedenfalls nicht rotiert, während der wenigstens eine Mitnehmer um die Mantelfläche herum geschwenkt wird. Der Vorteil dieser Variante besteht darin, dass das Nutende der in den Zylinder eingebrachten Nut seine Lage hierbei nicht ändert, der Ort der Ausgabe der einzelnen Elemente also im Wesentlichen unverändert bleibt. Rotiert stattdessen der Zylinder bei im Wesentlichen feststehendem Mitnehmer, so wandert das Nutende um die Rotationsachse des Zylinders, und der vom Nutende definierte Ausgabeort der Elemente ist veränderlich.

Eine besonders bevorzugte Ausführungsform der Erfindung sieht vor, dass eine Anzahl (n) mehrerer Mitnehmer - vorzugsweise gleichmäßig - um die Mantelfläche herum angeordnet wird. Die Mitnehmer bilden gleichsam eine Art Rechen oder Käfig. Dieser ist - wie zuvor der einzelne Mitnehmer - um die Rotationsachse des Zylinders schwenkbar, sodass alle um den Zylinder angeordneten Mitnehmer die Manteloberfläche gleichzeitig überstreichen. Dies vergleichmäßigt den Vorschub über den Umfang. Zum anderen werden die in der Nut sitzenden Elemente durch mehrere Mitnehmer in kleinere Gruppen unterteilt mit wenigen, vorzugsweise nur jeweils einem Element, was die Dosierung am Nutende vereinfacht.

Der Abstand zweier benachbarter Mitnehmer des Käfigs in Umfangsrichtung (genauer: in Längsrichtung der Nut) kann daher so gewählt werden, dass eine definierte Anzahl von Elementen zwischen den zueinander benachbarten Mitnehmern in der Nut angeordnet ist. Denkbar ist bspw. eine Ausführungsform, bei der drei in der Nut hintereinander sitzende Elemente von einem vorausgehenden und einem nachfolgenden Mitnehmer in Umfangsrichtung eingefasst sind. Eine einigermaßen spielfreie Dimensionierung bzw. Positionierung der Mitnehmer relativ zu den in der Nut einsitzenden Elementen gestattet eine exakte Führung bzw. Positionierung der Elemente, insbesondere beim Weiterfördern durch Verschwenken des Käfigs.

Eine besonders bevorzugte Ausführungsform der Erfindung sieht vor, dass in Umfangsrichtung jeweils genau nur ein Element zwischen zwei zueinander benachbarten Mitnehmern des Käfigs Platz findet. Der Vorteil dieser Ausführungsform liegt darin, dass die einzelnen Elemente in Umfangsrichtung alle den gleichen Abstand zueinander aufweisen. Daraus folgt, dass eine getaktete Weiterförderung der Elemente (siehe unten) durch Verschwenken des Käfigs um einen konstanten Schwenkwinkel erfolgen kann.

In Weiterführung dieser Überlegung ist es vorteilhaft, den Abstand zweier benachbarter Mitnehmer in Umfangsrichtung so zu wählen, dass genau ein Elementkopf dazwischen passt. Dies ist zweckmäßig für eine Anwendung, bei der die Elemente mit ihrem Schaft vollständig in die Nut hineinragen, sodass lediglich der Kopf darüber hinaussteht und auf der Mantelfläche aufliegt. Zwei benachbarte Mitnehmer fassen den Kopf dabei in Umfangsrichtung ein, wobei der in Schwenkrichtung "hintere" Mitnehmer beim Überstreichen der Mantelfläche den jeweiligen Elementkopf seitlich beaufschlagt und das betreffende Element entlang der Nut verschiebt.

Denkbar ist jedoch auch eine Variante, bei der der Umfangsabstand der Mitnehmer geringer ausfällt als der Durchmesser eines Elementkopfes, nämlich etwa in der Größenordnung eines Schaftdurchmessers eines Elements. Das erscheint dann zweckmäßig, wenn auch ein Abschnitt des Elementschaftes radial nach außen über die Nut hervorsteht und die Mitnehmer so ausgebildet sind, dass sie radial innerhalb bzw. unterhalb des Schaftkopfes gegen diesen überstehenden Schaftabschnitt bewegbar sind. Dann wird nicht der Elementkopf, sondern der Schaft seitlich beaufschlagt, während der Elementkopf soweit radial nach außen über die Mantelfläche vorsteht, dass der Mitnehmer in den radialen Spalt zwischen Manteloberfläche und Kopfunterseite eingreifen kann. Der Vorteil dieser Ausführungsform liegt darin, dass die Anzahl der insgesamt vom Magazin aufnehmbaren Elemente erhöht wird, da die einzelnen Elementköpfe in Umfangsrichtung nicht mehr von den Mitnehmern getrennt sind, sondern diese stattdessen teilweise überlappen.

In jedem Fall sieht eine vorteilhafte Ausführungsform der Erfindung vor, dass in Umfangsrichtung zwischen zueinander benachbarten Mitnehmern ein Speicherplatz für genau ein Element ausgebildet ist. In Z-Richtung (dies sei die Richtung der Rotationsachse des Zylinders) definieren die beiden benachbarten Mitnehmer eine Anzahl von Speicherplätzen, welche mit der Anzahl der Windungen der Nut im Zylinder übereinstimmt.

Bei den Mitnehmern kann es sich um im Wesentlichen gerade geformte Streben handeln, die parallel zur Rotationsachse nahe der Manteloberfläche angeordnet sind. Denkbar ist alternativ jedoch auch eine gegenüber der Rotationsachse geneigte Ausrichtung oder eine beliebig geschwungene oder geformte Gestalt jedes Mitnehmers. Er könnte bspw. so geschaffen sein, dass die Beaufschlagung der einzelnen Elemente genau in Längsrichtung der Nut erfolgt, also in Abhängigkeit der Nut-Steigung. Wichtig ist lediglich, dass jeder Mitnehmer über die gesamte axiale Erstreckung der Nut die darin befindlichen Elemente beaufschlagen kann.

Die einzelnen Mitnehmer des Käfigs können am oberen und/oder unteren Zylinderende über eine geeignete Flanschkonstruktion miteinander verbunden sein, um den Käfig zu bilden. Ein mit der Flanschkonstruktion zusammenwirkender Antrieb kann ferner dazu dienen, die Schwenkbewegung des Käfigs relativ zum Zylinder zu bewirken.

Zweckmäßigerweise ist die erfindungsgemäße Nut so geformt, dass sie den Elementschaft oder wenigstens einen Teil davon sicher aufnimmt. Vorzugsweise ist die Nutbreite nur geringfügig größer gewählt als der von der Nut aufzunehmende Schaftdurchmesser, sodass der Schaft in Z-Richtung durch die einander gegenüberliegenden Flanken der Nut geführt wird. Vorzugsweise verlaufen die Flanken der Nut, ausgehend von der Mantelfläche des Zylinders, rechtwinklig in Richtung auf die Rotationsachse. Der Nutgrund kann sich zu diesen beiden gegenüberliegenden Flanken rechtwinklig erstrecken. Denkbar sind jedoch auch andere Formen der Nutflanken. So könnten die Nutflanken bspw. gegenüber der Z-Richtung geneigt sein, indem sie zur Rotationsachse hin abfallen. Bei einem senkrecht stehenden Magazin wären die Schäfte der darin eingesetzten Elemente dann zur Rotationsachse hin leicht nach unten geneigt. Dies könnte ein unbeabsichtigtes Herausfallen der Elemente in radialer Richtung nach außen erschweren oder verhindern.

Um die in das Magazin eingesetzten Elemente daran zu hindern, in radialer Richtung aus der Nut nach außen herauszufallen, sieht eine vorteilhafte Ausführungsform der Erfindung vor, dass der Zylinder und die Mitnehmer von einer gemeinsamen, vorzugsweise ebenfalls zylinderförmigen Hülle umgeben sind. Der Innenradius dieser Hülle wird zweckmäßigerweise geringfügig größer gewählt als der Abstand von der Oberseite eines im Magazin einsitzenden Elementkopfs bis zur Rotationsachse des Zylinders. In diesem Fall werden die im Magazin einsitzenden Elemente besonders sicher und genau positioniert: Der Elementkopf wird in radialer Richtung nach innen durch die Zylindermantelfläche und nach außen durch die Innenseite der Hülle geführt. In Umfangsrichtung wird der Elementkopf durch benachbarte Mitnehmer (oder Elemente) eingefasst. In Z-Richtung stabilisieren die einander gegenüberliegenden Flanken der Nut den Elementschaft.

Alternativ zu einer auf der Außenseite der Elementköpfe vorzusehenden Hülle könnte die radiale Fixierung der Elemente auch durch eine im Zentrum des Zylinders anzuordnende magnetische Seele bewirkt werden, wenn die Elemente oder zumindest deren Schäfte geeignete ferromagnetische Eigenschaften aufweisen und dann allein durch die magnetische Anziehungskraft in Richtung auf die Rotationsachse ins Zylinderinnere gezogen werden.

Um ein Element, welches das Nutende erreicht hat, zu entnehmen oder auswerfen zu können ist nach einer vorteilhaften Ausführungsform ein Auswurfmechanismus vorgesehen. Dieser kann druckluftbetätigbar sein. Denkbar wäre bspw., über einen im Bereich des Nutendes in die Nut führenden Druckluftkanal Druckluft einzublasen, welche den Elementkopf untergreift und diesen radial nach außen fördert. Andere, dem Fachmann geläufige Auswurfmechanismen sind ebenfalls denkbar. Vorzugsweise ist der Auswurfmechanismus synchronisiert mit oder sogar veranlasst durch die Schwenkbewegung des Käfigs. So könnte der Druckluftkanal im Rahmen eines Schwenktakts bspw. durch mit dem Schwenkantrieb gekoppelte mechanische Mittel kurzfristig geöffnet und wieder verschlossen werden. Auch ein federbehafteter Auswurfmechanismus kann alternativ mit dem Schwenkantrieb koppelbar sein.

Die bevorzugte Ausführungsform der Erfindung sieht genau eine spiralförmige Nut in dem Zylinder vor, wobei die am Nutanfang seriell in die Nut eingeführten Elemente nach dem "first in-first out"-Prinzip entlang der Nut bis zum Nutende gefördert werden. In Weiterführung des erfindungsgemäßen Gedankens könnten jedoch auch mehrere, in axialer Richtung zueinander versetzt angeordnete Nuten im Zylinder vorgesehen sein, um bspw. verschiedenartige Elemente in einem Magazin jeweils hintereinander speichern zu können. Doch auch für gleichartige Elemente kann eine solche Variante interessant sein, wenn in einem Fertigungsprozess gleichzeitig mehrere Elemente aus dem Magazin abzugeben sind. Je nach Drehposition der einzelnen Nuten zueinander bzw. der daraus resultierenden Drehposition der einzelnen Nutenenden können an unterschiedlichen Umfangspositionen des Magazins gleichzeitig oder auch zeitlich versetzt zueinander gleichartige oder verschiedene Elemente ausgegeben werden, was die Flexibilität des erfindungsgemäßen Magazins entsprechend erhöht.

Ein Verfahren zur erfindungsgemäßen Verwendung eines vorgenannten Magazins betrifft zunächst den Grundgedanken, eine Mehrzahl von Elementen in der Nut des Magazins anzuordnen, wobei jedes Element einen Schaft und einen Kopf aufweist und die Elemente so in die Nut eingesetzt werden, dass der Schaft jedes Elements in die Nut hineinragt, während der Kopf in radialer Richtung nach außen über die Nut vorsteht. Durch dieses Verfahren lässt sich auf vergleichsweise kleinem Raum eine große Anzahl von Elementen in definierter Lage und vereinzelt speichern bzw. ausgeben.

Eine besonders vorteilhafte Ausführungsform des Verfahrens umfasst die Verwendung eines erfindungsgemäßen Magazins mit einem mittels Mitnehmern gebildeten Käfig, wobei der Käfig in einem Fördersinn um die Rotationsachse des relativ zum Käfig dabei stillstehenden Zylinders verschwenkt wird. Wenigstens ein Mitnehmer beaufschlagt dabei einen radial über die Nut nach außen vorstehenden Kopf oder Schaftabschnitt wenigstens eines Elements in Umfangsrichtung und fördert wenigstens dieses eine Element im Rahmen der Schwenkbewegung des Käfigs entlang der Nut.

Um in regelmäßigen Abständen (getaktet) ein bis in das Nutende vorgeschobenes Element entnehmen oder ein nachfolgendes Element bis in das Nutende verschieben zu können, sieht das erfindungsgemäße Verfahren vor, den Käfig jeweils um einen konstanten Schwenkwinkel um die Rotationsachse zu verschwenken. Alle im Magazin befindlichen und von den Mitnehmern des Käfigs dabei beaufschlagten Elemente werden dabei dem Schwenkwinkel entsprechend entlang der Nut in Richtung des Nutendes weiterverschoben. Zweckmäßigerweise ergibt sich der Schwenkwinkel β aus der Anzahl (n) der Mitnehmer des Käfigs nach der Formel β = 360°/n.

In jedem Takt, in dem die im Magazin angeordneten Elemente durch die Mitnehmer des Käfigs längs der Nut weitergeschoben werden, wandern die Elemente auch in axialer Richtung ein Stückchen näher an das Zylinderende, an dem sich das Nutende befindet. Dieser pro Takt zurückgelegte axiale Weg (z) richtet sich nach der Steigung P der Nut und der Anzahl (n) der gleichmäßig um den Zylinder verteilten Mitnehmer des Käfigs nach der Formel z = P/n.

Während das Magazin im regulären Betrieb vorzugsweise getaktet betrieben wird, um einzelne Elemente zeitlich oder örtlich gezielt ausgeben zu können, lässt sich das erfindungsgemäße Magazin besonders einfach beladen durch kontinuierliche Rotation des Käfigs relativ zum Zylinder. Dazu wird ein erstes Element in den Nutanfang des ansonsten vollständig geleerten Magazins eingesetzt. Durch Verschwenken des Käfigs relativ zum Zylinder wird das zuvor in den Nutanfang eingesetzte Element längs der Nut weiter verschoben, sodass der Nutanfang frei wird für ein weiteres Element. Durch aufeinanderfolgendes Zuführen von Elementen in das jeweils wieder freiwerdende Nutende können so nach und nach alle für das Beladen des Magazins vorgesehenen Elemente in die Nut eingeschleust und durch die Mitnehmer des Käfigs weitergefördert werden. Dies kann bei geeignet ausgebildeter Zuführung unter konstanter Schwenkbewegung des Käfigs um den Zylinder erfolgen, vorzugsweise auch mit höherer Drehzahl, um die Beladungszeit kurz zu halten.

Das Nutende und/oder der Nutanfang kann so ausgebildet sein, dass die Nut sich zur oberen oder unteren Stirnseite des Zylinders hin öffnet, sodass einzusetzende oder zu entnehmende Elemente in axialer Richtung dem Zylinder zugeführt und/oder von ihm entnommen werden können. Gerade für den Nutanfang scheint dies zweckmäßig, da andernfalls die Zuführung der einzelnen Elemente beim Beladen des Magazins in radialer Richtung zu erfolgen hätte. Die Elemente müssten in diesem Fall gezielt zueinander beabstandet zugeführt werden, um sicherzustellen, dass das jeweils dem Nutanfang zugeführte Element durch einen Mitnehmer aus dem Nutanfang heraus in die Nut gefördert werden kann, bevor das nächste Element in radialer Richtung ansteht. Stirnseitig dagegen könnten die einzufüllenden Elemente eng hintereinander anliegend am oberen Nutende "anstehen" und nacheinander in dieses hineinrutschen, sobald es frei ist.

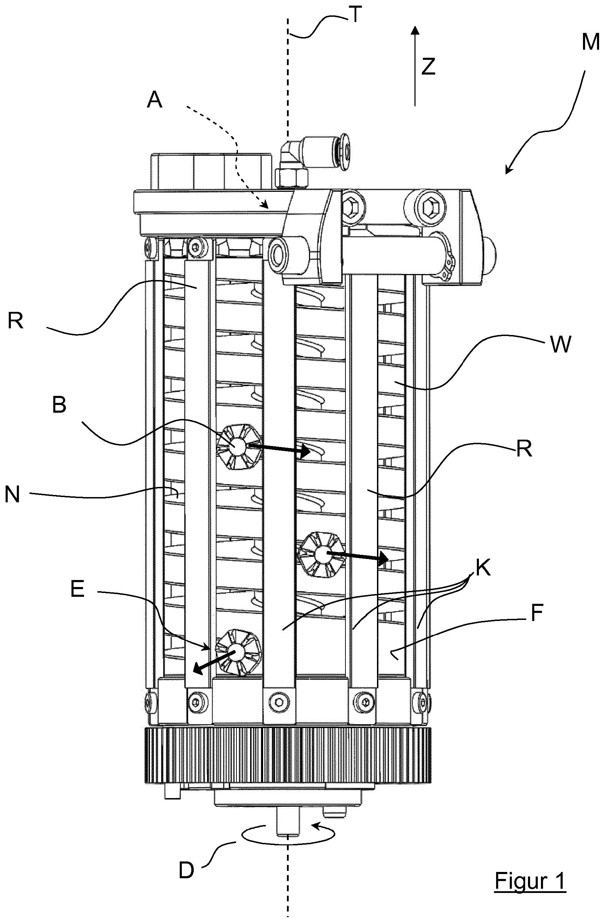

Die vom Magazin aufnehmbaren Elemente können, wie bereits erwähnt, insbesondere Befestigungsmittel sein, wie etwa Schrauben, Bolzen, Nägel etc., die einen Schaft und einen Kopf aufweisen. Da für die erfindungsgemäße Speicherung lediglich bedeutsam ist, dass der Kopf breiter ist als der Schaft, kommen auch andere Elemente zu Speicherung in Betracht, die eine solche Form aufweisen. Geeignet sind beispielsweise kleine Behälter, bei denen ein im Schaft eingeschlossenes Volumen durch einen Deckel verschlossen wird, welcher Teil des Kopfes ist oder diesen bildet. Dazu zählen Fläschchen, bei denen bspw. ein Schraubdeckel über den Umfang des den Schaft bildenden Flaschenkörpers radial hinaussteht. Auch Kapseln für Kaffee oder andere Produkte haben eine geeignete Form, wenn der Schaftbereich den eigentlichen Behälter bildet, und der radial erweiterte Deckel dem Kopf entspricht. Für das Magazin ist grundsätzlich jeder Körper geeignet, der mit einem (Schaft-)Abschnitt in die Nut des Magazins eintauchen kann, während ein breiterer (Kopf-)Abschnitt auf einer oder beiden Seiten der Nutflanken auf der Zylindermantelfläche aufliegen kann. Eine vorteilhafte Ausführungsform eines erfindungsgemäßen Magazins wird nachfolgend anhand der einzigen Fig. 1 beschrieben.

Fig. 1 zeigt ein Magazin in vertikaler Ausrichtung, wobei grundsätzlich jede Ausrichtung im Raum wählbar ist. Das Magazin M umfasst einen um eine Rotationsachse T ausgebildeten Zylinder W mit einer äußeren Mantelfläche F. Die Rotationsachse T verläuft hier in einer Richtung Z.

Die Mantelfläche F des Zylinders W ist von einer Nut N durchsetzt, die in Richtung Z spiralförmig um die Rotationsachse T verläuft. Die Steigung der Nut N ist so gewählt, dass sich die Nut N in etwa acht gleichmäßigen Windungen von einem zum anderen Zylinderende erstreckt.

Am oberen Zylinderende in Fig. 1 mündet die Nut in einen Nutanfang A. Der Nutanfang A führt in die obere, zur Rotationsachse T senkrechte Stirnfläche des Zylinders W, wobei der Nutanfang A in Fig. 1 durch Konstruktionselemente verdeckt ist. Am unteren Ende des Zylinders W ist ein Nutende E ausgebildet, wobei das Nutende E in der Darstellung durch den Kopf eines Elements B verdeckt wird.

Die Nut N ist dazu ausgebildet, eine Vielzahl von Elementen B zu speichern. Die Elemente B weisen einen nicht näher dargestellten Schaft auf, der an einem oberen Ende in einen Kopf mündet. Typisches Beispiel für ein geeignetes Element wäre eine Schraube mit Schraubenschaft und Schraubenkopf. Die Elemente B sind derart in der Nut N des Zylinders W anzuordnen, dass der Schaft in die Nut hinein bzw. in Richtung auf die Rotationsachse T weist, während der Kopf, der breiter ist als die Nut, nicht in diese hineinragen kann und stattdessen mit seiner dem Schaft zugewandten Unterseite auf der Mantelfläche des Zylinders W aufliegt.

Der Zylinder W ist eng umgeben von einem Käfig K, der hauptsächlich gebildet wird aus einer Anzahl gleichmäßig um die Rotationsachse T angeordneten Mitnehmern R. Die Mitnehmer R erstrecken sich in dieser Ausführungsform parallel zur Rotationsachse T und sind unter anderem über eine im Wesentlichen unterhalb des Zylinders W positionierte Flanschkonstruktion L miteinander verbunden. Der so gebildete Käfig K ist relativ zum Zylinder W um die Rotationsachse T schwenkbar. Dabei gleiten die Mitnehmer R in geringem radialem Abstand in Umfangsrichtung auf der Mantelfläche F des Zylinders W entlang.

Die Mitnehmer R des Käfigs K sind in Umfangsrichtung so zueinander beabstandet, dass zwischen ihnen der Kopf eines Elements B Platz findet, vorzugsweise ohne nennenswertes Spiel. Bei einem als unbewegt angenommenen Zylinder W führt die Schwenkbewegung des Käfigs K um die Rotationsachse T dazu, dass die zwischen den Mitnehmern R in der Nut N einsitzenden Elemente B in Umfangsrichtung seitlich beaufschlagt und dem Schwenkwinkel entsprechend in der Nut N weitergeschoben werden.

Aus Gründen der Übersichtlichkeit sind nur einige Elemente B gezeigt, die mit ihren (nicht zu sehenden) Schäften in die Nut N hineinragen. Zweckmäßigerweise kann das Magazin M jedoch vollständig gefüllt werden derart, dass alle zwischen den Mitnehmern R in Umfangsrichtung verfügbaren Speicherplätze, die in Z-Richtung gesehen übereinander liegen, mit Elementen B besetzt sind. Ebenfalls nicht gezeigt ist eine den Zylinder W und den Käfig K abdeckende zylinderförmige Hülle, die sich mit geringfügigem radialem Abstand zu den Mitnehmern R bzw. den Köpfen der Elemente B um die Rotationsachse T erstreckt. Die Hülle dient dazu, die Elemente B in radialer Richtung nach außen hin zu stabilisieren bzw. gegen ein Herausfallen zu sichern.

Fig. 1 zeigt anschaulich, dass ein Verschwenken des Käfigs K in einem Drehsinn D um den als stillstehend angenommenen Zylinder W dazu führt, dass die einzelnen in der Nut N einsitzenden Elemente B in der Nut verschoben werden, wodurch sie um die Rotationsachse T herumbewegt und gleichzeitig aufgrund der Steigung der spiralförmigen Nut auch in Z-Richtung nach unten geschoben werden. Fig. 1 zeigt dabei den Fall, dass ein erstes Element B das Nutende E erreicht hat. In dieser Position kann das Element B aus dem Nutende E ausgeworfen werden, bspw. durch Druckluftbeaufschlagung über einen nicht näher dargestellten Kanal im Inneren des Zylinders W. Erst nachdem das vorderste (in Fig. 1 unterste) Element B das Nutende E verlassen hat, kann der Käfig K weiter verschwenkt werden, um das nachfolgende nächste Element B in das Nutende zu verschieben (ein solches unmittelbar nachfolgendes Element ist in Fig. 1 nicht gezeigt, es wäre jedoch zwischen den beiden ganz links in Fig. 1 dargestellten Mitnehmern R im untersten Gang der Nut N platziert).

Die im Magazin M gespeicherten Elemente B können aufeinanderfolgend und getaktet dem Nutende E zugeführt werden, indem der Käfig K um einen dem jeweiligen Takt zugehörigen Schwenkwinkel um die Rotationsachse T bzw. relativ zum Zylinder W im Drehsinn D verschwenkt wird. Der dazu erforderliche Schwenkwinkel β ergibt sich aus der Anzahl (n) der gleichmäßig um den Zylinder W angeordneten Mitnehmer R, geteilt durch 360°. Der Käfig K ist dazu über einen nicht näher gezeigten Antrieb verschwenkbar, wobei dieser bspw. an einer mit einem Stirnrad versehenen Flanschkonstruktion L angreifen könnte. Alternativ kann das getaktete Weiterschwenken des Käfigs K auch mit Hilfe eines pneumatischen Antriebs realisiert werden, der eine lineare Hubbewegung eines Pneumatikzylinders in eine auf den Käfig K übertragene Schwenkbewegung umwandelt.

Um ein leeres Magazin M mit Elementen B zu beladen, wird vorzugsweise wie folgt vorgegangen:
Der Käfig K wird so verschwenkt, dass der (in Fig. 1 verdeckt) Nutanfang A am oberen Ende des Zylinders W in Umfangsrichtung zwischen zwei benachbarten Mitnehmern R liegt. Sodann kann ein erstes bzw. vorderstes Element B in den Nutanfang A eingesetzt werden, bspw. aus einer Zufuhreinrichtung, in der die Elemente B seriell bereitgestellt werden. Durch Verschwenken des Käfigs K beaufschlagt der in Umfangsrichtung "hinter" dem Nutanfang positionierte Mitnehmer R das im Nutanfang einsetzende Element und verschiebt es in der Nut ein Stückchen weiter. Hat der genannte Mitnehmer R den Nutanfang vollständig überstrichen, ist dieser frei für die Zufuhr des nächsten Elements B, welches dann in gleicher Weise dort eingesetzt und durch erneutes Verschwenken des Käfigs K weitergefördert werden kann. Dieser Beladevorgang kann im Rahmen einer kontinuierlichen Rotation des Käfigs K um die Rotationsachse T erfolgen, indem die in das Magazin M einzufüllenden Elemente B oberhalb des Nutanfangs A bereitstehen und alleine oder durch mechanische Hilfsmittel automatisch in den Nutanfang eingesetzt werden, sobald dieser frei ist. So lässt sich das Magazin M in kurzer Zeit vollständig befüllen. Die Befüllung ist abschlossen, sobald das zuerst eingesetzte Element B das Nutende E erreicht hat.

Es ist denkbar, dass im Rahmen eines Fertigungsprozesses ein Magazin nicht vollständig entleert wird, bevor es wieder aufgefüllt werden soll. In diesem Fall kann der Käfig K entgegen des Drehsinns D soweit zurückgedreht werden, bis das zuletzt eingesetzte Element B die Position unmittelbar hinter dem Nutanfang A erreicht hat (alle im Magazin angeordneten Elemente B werden dabei - statt abwärts zum Nutende E hin - in diesem Fall aufwärts bzw. zum Nutanfang A hin verschoben. Durch anschließendes Befüllen des Magazins in der zuvor beschriebenen Weise wird das Magazin M lückenlos aufgefüllt. Durch geeignete, am Magazin M angeordnete und in Fig. 1 nicht näher dargestellte Detektoren lässt sich ermitteln, ob bzw. wie viele Elemente B sich im Magazin M befinden. Bei lückenloser Befüllung und Protokollierung der einzelnen Schwenktakte kann der Befüllungsgrad des Magazins auch ohne Sensoren ermittelt werden.

## Patentansprüche

1. Magazin (M) für die Aufnahme mehrerer gleichartiger Elemente (B), welche einen Schaft und einen Kopf aufweisen, das Magazin (M) umfassend
a) einen von einer Mantelfläche (F) begrenzten Zylinder (W), der um eine Rotationsachse (T) ausgebildet ist, die sich in einer axialen Richtung (Z) erstreckt,
b) wobei die Mantelfläche (F) von wenigstens einer Nut (N) durchsetzt ist, welche ausgehend von einem Nutanfang (A) die Rotationsachse (T) spiralförmig in mehreren Windungen bis zu einem Nutende (E) umläuft,
c) so dass mehrere Elemente (B) mit ihrem jeweils in das Zylinderinnere gerichteten Schaft in die Nut (N) einsetzbar sind, um sie auf diese Weise zu speichern,
**dadurch gekennzeichnet,**
d) **dass** wenigstens ein antreibbarer Mitnehmer (R) vorgesehen ist, der in einem Fördersinn (D) in Umfangsrichtung um die Mantelfläche (F) herumbewegbar ist, um dabei den radial aus der Nut herausragenden Kopf oder Schaft eines Elements (B) durch seitliche Beaufschlagung entlang der Nut (N) zu verschieben.

2. Magazin nach Anspruch 1, **dadurch gekennzeichnet, dass** eine Anzahl (n) gleichmäßig um die Mantelfläche (F) verteilter Mitnehmer (R) gemeinsam einen Käfig (K) bilden, der so um die Rotationsachse schwenkbar ist, dass dabei die Mitnehmer (R) in Umfangsrichtung über die Mantelfläche bewegt werden.

3. Magazin nach Anspruch 2, **dadurch gekennzeichnet, dass** die Anzahl (n) der Mitnehmer (R) so gewählt ist, dass ihr jeweiliger Abstand in Umfangsrichtung Platz bietet für genau einen Elementkopf oder Elementschaft.

4. Magazin nach Anspruch 2 oder 3, **dadurch gekennzeichnet, dass** die Mitnehmer (R) in Z-Richtung verlaufende oder zur Z-Richtung geneigte, zueinander parallel verlaufende Streben sind, die sich über die axiale Länge der wenigstens einen Nut (N) erstrecken.

5. Magazin nach einem der Ansprüche 1 bis 4, **dadurch gekennzeichnet, dass** jeweils zwei benachbarte Mitnehmer (R) zwischen sich einzelne, in Z-Richtung hintereinander liegende Speicherplätze für jeweils ein Element (B) ausbilden, deren Anzahl mit der Zahl der Windungen der Nut (N) übereinstimmt.

6. Magazin nach einem der vorigen Ansprüche, **dadurch gekennzeichnet, dass** die wenigstens eine Nut (N) eine zur Rotationsachse (T) gerichtete Flanke aufweist, die mit ihr einen Winkel 0 < α ≤ 90°, vorzugsweise α = 90°, bildet.

7. Magazin nach einem der vorigen Ansprüche, **dadurch gekennzeichnet, dass** der Zylinder (W) und Mitnehmer (R) von einer gemeinsamen Hülle (H) umgeben sind, um zu verhindern, dass in der Nut (N) angeordnete Elemente (B) in radialer Richtung aus der Nut (N) herausfallen.

8. Magazin nach einem der vorigen Ansprüche, **dadurch gekennzeichnet, dass** ein vorzugsweise druckluftbetätigbarer Auswurfmechanismus vorgesehen ist, um ein am Nutende (E) angeordnetes Element (B) aus der Nut (N) auswerfen zu können.

9. Verfahren zur Speicherung von gleichartigen Elementen (B) in einem Magazin (M) nach einem der vorigen Ansprüche, wobei die Elemente (B) jeweils einen Schaft und einen an den Schaft anschließenden Kopf aufweisen, umfassend folgenden Verfahrensschritt:
Anordnen einer Mehrzahl von Elementen (B) in der Nut (N) derart, dass der Schaft jedes Elements (B) in die Nut (N) hineinragt, während der Kopf in radialer Richtung nach außen über die Nut vorsteht.

10. Verfahren nach Anspruch 9, **dadurch gekennzeichnet, dass** ein Käfig (K), der von einer Anzahl (n) gleichmäßig um die Mantelfläche (F) herum verteilter Mitnehmer (R) gebildet wird, in einem Fördersinn (D) um die Rotationsachse (T) verschwenkt wird, wobei wenigstens ein Mitnehmer (R) den radial über die Nut vorstehenden Kopf oder Schaft wenigstens eines Elements (B) durch seitliche Beaufschlagung entlang der Nut (N) verschiebt.

11. Verfahren nach Anspruch 10, wobei benachbarte Mitnehmer (R)
a) in Umfangsrichtung gesehen genau ein Element (B) und/oder
b) in axialer Richtung gesehen mehrere hintereinander liegende Elemente (B) zwischen sich aufnehmen.

12. Verfahren nach Anspruch 10 oder 11, **dadurch gekennzeichnet, dass** der Käfig (K) taktweise um einen konstanten Schwenkwinkel (β) um die Rotationsachse (T) verschwenkt wird, so dass pro Takt alle Elemente (B) in der Nut (N) verschoben und genau ein Element (B) am Nutende (E) ausgeworfen werden kann, wobei sich der Schwenkwinkel (β) vorzugsweise berechnet nach β = 360°/n.

13. Verfahren nach einem der vorigen Verfahrensansprüche, **dadurch gekennzeichnet, dass** ein Beladen des Magazins erfolgt unter Verschwenken des Käfigs (K) für eine vorgebbare Anzahl von Umdrehungen um den Zylinder (W), wobei sich folgende Schritte aufeinanderfolgend wiederholen:
a) Einsetzen eines Elements (B) in den Nutanfang;
b) Weiterfördern des soeben eingesetzten Elements (B), indem ein Mitnehmer (R) des Käfigs (K) über den Nutanfang streicht und dabei das Element (B) in der Nut weiterschiebt;
c) Weiterschwenken des Käfigs, bis der Mitnehmer (R) gemäß Schritt b) den Nutanfang soweit überstrichen hat, dass dort ein weiteres Element (B) einsetzbar ist.

## Claims

1. Magazine (M) for receiving multiple uniform elements (B), which have a shaft and a head, the magazine (M) comprising
a) a cylinder (W), defined by a lateral surface (F), which is formed about an axis of rotation (T) which extends in an axial direction (Z),
b) wherein at least one groove (N), which runs around the axis of rotation (T) helically in multiple loops starting from a groove start (A) to a groove end (E), is made in the lateral surface (F),
c) with the result that multiple elements (B) can be inserted into the groove (N) in each case with their shaft directed into the interior of the cylinder, in order to store them in this manner,
**characterized in that**
d) at least one drivable carrier (R) is provided, which can be moved in a conveying direction (D) in the circumferential direction around the lateral surface (F), in order to shift the head or shaft of an element (B), protruding radially from the groove, along the groove (N) through a lateral impact.

2. Magazine according to claim 1, **characterized in that** a number (n) of carriers (R) evenly distributed around the lateral surface (F) together form a cage (K), which can be rotated about the axis of rotation such that in the process the carriers (R) are moved in the circumferential direction over the lateral surface.

3. Magazine according to claim 2, **characterized in that** the number (n) of carriers (R) is chosen such that their respective spacing in the circumferential direction provides space for precisely one element head or element shaft.

4. Magazine according to claim 2 or 3, **characterized in that** the carriers (R) are struts running in the Z-direction or running parallel to one another and inclined relative to the Z-direction, which extend over the axial length of the at least one groove (N).

5. Magazine according to one of claims 1 to 4, **characterized in that** in each case two adjacent carriers (R) form between them individual storage spaces, for one element (B) in each case, lying one after another in the Z-direction, the number of which corresponds to the number of loops of the groove (N).

6. Magazine according to one of the preceding claims, **characterized in that** the at least one groove (N) has an edge oriented towards the axis of rotation (T) which forms an angle 0 < α ≤ 90°, preferably α = 90°, with it.

7. Magazine according to one of the preceding claims, **characterized in that** the cylinder (W) and carriers (R) are surrounded by a common casing (H), in order to prevent elements (B) arranged in the groove (N) from falling out of the groove (N) in the radial direction.

8. Magazine according to one of the preceding claims, **characterized in that** a preferably pneumatically operable ejection mechanism is provided, in order to be able to eject an element (B) arranged at the groove end (E) from the groove (N).

9. Method for storing uniform elements (B) in a magazine (M) according to one of the preceding claims, wherein the elements (B) each have a shaft and a head attached to the shaft, comprising the following method step:
arranging a number of elements (B) in the groove (N) in such a way that the shaft of each element (B) extends into the groove (N), while the head projects outwards in the radial direction beyond the groove.

10. Method according to claim 9, **characterized in that** a cage (K), which is formed by a number (n) of carriers (R) evenly distributed around the lateral surface (F), is rotated about the axis of rotation (T) in a conveying direction (D), wherein at least one carrier (R) shifts the head or shaft of at least one element (B), projecting radially beyond the groove, along the groove (N) through a lateral impact.

11. Method according to claim 10, wherein adjacent carriers (R) receive between them
a) precisely one element (B), when viewed in the circumferential direction, and/or
b) multiple elements (B) lying one after another, when viewed in the axial direction.

12. Method according to claim 10 or 11, **characterized in that** the cage (K) is rotated in phases about the axis of rotation (T) by a constant rotation angle (β), with the result that in each phase all elements (B) can be shifted in the groove (N) and precisely one element (B) can be ejected at the groove end (E), wherein the rotation angle (β) is preferably calculated according to β = 360°/n.

13. Method according to one of the preceding method claims, **characterized in that** the magazine is loaded by rotating the cage (K) for a predefinable number of revolutions around the cylinder (W), wherein the following steps are repeated successively:
a) inserting an element (B) into the start of the groove;
b) further conveying the element (B) just inserted, **in that** a carrier (R) of the cage (K) passes over the start of the groove and in the process shifts the element (B) further in the groove;
c) further rotating the cage, until the carrier (R) has passed over the start of the groove in accordance with step b) to the extent that a further element (B) can be inserted there.

## Revendications

1. Magasin (M) pour la réception de plusieurs éléments (B) similaires, lesquels comportent une tige et une tête, le magasin (M) comprenant
a) un cylindre (W) délimité par une surface latérale (F) et formé autour d'un axe de rotation (T), lequel s'étend dans une direction axiale (Z),
b) dans lequel la surface latérale (F) est traversée par au moins une rainure (N), laquelle, partant d'un début de rainure (A), s'étend autour de l'axe de rotation (T) sous forme de spirale en plusieurs tours jusqu'à une fin de rainure (E)
c) de telle sorte que plusieurs éléments (B) peuvent être insérés dans la rainure (N) avec leur tige respective dirigée dans l'intérieur du cylindre afin de les stocker de cette façon,
**caractérisé en ce**
d) **qu'**au moins un entraîneur (R) pouvant être entraîné peut être déplacé dans un sens de transport (D) dans la direction circonférentielle, autour de la surface latérale (F), afin d'ainsi déplacer la tête ou la tige d'un élément (B) faisant saillie radialement hors de la rainure par action latérale le long de la rainure (N).

2. Magasin selon la revendication 1, **caractérisé en ce qu'**un nombre (n) d'entraîneurs (R) régulièrement répartis autour de la surface latérale (F) forment ensemble une cage (K), laquelle peut pivoter autour de l'axe de rotation de telle sorte que les entraîneurs (R) sont déplacés dans la direction circonférentielle sur la surface latérale.

3. Magasin selon la revendication 2, **caractérisé en ce que** le nombre (n) d'entraîneurs (R) est choisi de telle sorte que leur écartement respectif dans la direction circonférentielle offre un emplacement pour exactement une tête d'élément ou une tige d'élément.

4. Magasin selon la revendication 2 ou 3, **caractérisé en ce que** les entraîneurs (R) sont des entretoises s'étandant dans la direction Z ou inclinées dans la direction Z et s'étendent parallèlement entre elles, lesquelles s'étendent sur la longueur axiale de l'au moins une rainure (N).

5. Magasin selon l'une quelconque des revendications 1 à 4, **caractérisé en ce que**, respectivement deux entraîneurs (R) adjacents forment des emplacements de stockage individuels se trouvant l'un derrière l'autre dans la direction Z, pour respectivement un élément (B), dont le nombre correspond au nombre de tours de la rainure (N).

6. Magasin selon l'une quelconque des revendications précédentes, **caractérisé en ce que** l'au moins une rainure (N) comporte un flanc dirigé vers l'axe de rotation (T), lequel forme avec le flanc un angle de 0 <α ≤ 90 °, de préférence α = 90 °.

7. Magasin selon l'une quelconque des revendications précédentes, **caractérisé en ce que** le cylindre (W) et l'entraîneur (R) sont entourés par une enveloppe (H) commune afin d'éviter que des éléments (B) disposés dans la rainure (N) tombent dans la direction radiale hors de la rainure (N).

8. Magasin selon l'une quelconque des revendications précédentes, **caractérisé en ce qu'**un mécanisme d'éjection, de préférence actionnable par air comprimé peut éjecter un élément (B) disposé à l'extrémité de rainure (E) hors de la rainure (N).

9. Procédé de stockage des éléments (B) similaires dans un magasin (M) selon l'une quelconque des revendications précédentes, dans lequel les éléments (B) comportent respectivement une tige et une tête attenante à la tige, comprenant l'étape de procédé suivante :
la disposition d'une pluralité d'éléments (B) dans la rainure (N) de telle sorte que la tige de chaque élément (B) fait saillie dans la rainure (N), la tête dépassant au-delà de la rainure dans la direction radiale vers l'extérieur.

10. Procédé selon la revendication 9, **caractérisé en ce qu'**une cage (K), laquelle est formée par un nombre (n) d'entraîneurs (R) régulièrement répartis autour de la surface latérale (F), est pivotée autour de l'axe de rotation (T) dans un sens de transport (D), dans lequel au moins un entraîneur (R) déplace la tête ou la tige de l'au moins un élément (B) faisant saillie radialement au-delà de la rainure par action latérale le long de la rainure (N).

11. Procédé selon la revendication 10, dans lequel des entraîneurs (R) adjacents
a) vus dans la direction circonférentielle, reçoivent entre eux exactement un élément (B) et/ou
b) vus dans la direction axiale, reçoivent entre eux plusieurs éléments (B) se trouvant les uns derrière les autres entre eux.

12. Procédé selon la revendication 10 ou 11, **caractérisé en ce que** la cage (K) est pivotée cycliquement à un angle de pivotement (β) constant autour de l'axe de rotation (T) de telle sorte que tous les éléments (B) sont décalés dans la rainure (N) par cycle et exactement un élément (B) peut être éjecté à la fin de rainure (E), dans lequel l'angle de pivotement (β) est de préférence calculé selon β = 360 °/n.

13. Procédé selon l'une quelconque des revendications précédentes, **caractérisé en ce qu'**un chargement du magasin est effectué par pivotement de la cage (K) suivant un nombre de tours prédéterminable autour du cylindre (W), dans lequel les étapes suivantes sont répétées successivement :
a) l'insertion d'un élément (B) dans le début de rainure ;
b) le transport de l'élément (B) venant d'être inséré, un entraîneur (R) de la cage (K) venant contre le début de rainure et poussant ainsi l'élément (B) plus loin dans la rainure ;
c) le pivotement de la cage jusqu'à ce que l'entraîneur (R), selon l'étape b), ait dépassé le début de rainure afin qu'un autre élément (B) puisse y être inséré.
